# EUROPÄISCHE PATENTSCHRIFT

(11) **EP 1 996 490 B1**
(45) Veröffentlichungstag und Bekanntmachung des Hinweises auf die Patenterteilung: **08.04.2009**
(21) Anmeldenummer: 07727145.0
(22) Anmeldetag: 21.03.2007
(51) Int. Cl.: B65G 23/44, B65H 23/04, F15B 15/26

(54) **SPANNVORRICHTUNG EINES UMLAUFENDEN ELEMENTES**
TENSIONING APPARATUS OF A CIRCULATING ELEMENT
DISPOSITIF DE SERRAGE D'UN ELEMENT EN ROTATION

(30) Priorität: 22.03.2006 DE 102006013635; 20.12.2006 DE 102006060236
(43) Veröffentlichungstag der Anmeldung: 03.12.2008
(60) Teilanmeldung: 08166196.9
(73) Patentinhaber: Koenig & Bauer Aktiengesellschaft, 97080 Würzburg (DE)
(72) Erfinder: MELCHIOR, Wolfgang, 67258 Hessheim (DE)
(86) Internationale Anmeldenummer: PCT/EP2007/052668
(87) Internationale Veröffentlichungsnummer: WO 2007/107581

(56) Entgegenhaltungen:
- EP-A1- 0 890 532
- DE-A1- 3 113 894
- DE-A1- 10 014 700
- DE-A1- 10 158 985

## Beschreibung

Die vorliegende Erfindung betrifft eine Spannvorrichtung eines umlaufenden Elementes gemäß dem Oberbegriff des Anspruchs 1.

Derartige Endlosbänder werden in der Produktionstechnik für den Transport von Werkstücken eingesetzt. Die Werkstücke können für den Transport in im Wesentlichen horizontaler Richtung lose auf einem Endlosband oder mehreren nebeneinander angeordneten Endlosbändern aufliegen, oder sie können für den Transport in beliebige Richtungen zwischen einander gegenüberliegenden umlaufenden Endlosbändern eingeklemmt sein. Im einen wie im anderen Falle ist es für eine exakte Förderung der Werkstücke wichtig, dass die Endlosbänder eine vorgegebene Spannung aufweisen, sei es, um das Durchhängen der Bänder unter dem Gewicht der Werkstücke auf ein vorgegebenes Maß zu beschränken oder um eine hinreichend feste Klemmung der Werkstücke zwischen einander gegenüberliegenden Bändern zu gewährleisten.

Eine Spannvorrichtung, mit der eine gewünschte Spannung eines umlaufenden Endlosbandes realisierbar ist, umfasst im Allgemeinen einen Grundkörper, der im Bezug auf ein das Band tragendes Gestell ortsfest ist, und ein das Band berührendes Kopfstück, das im Bezug auf den Grundkörper verstellbar ist, um die Weglänge des Bandes und damit seine Spannung zu variieren.

Zum Verstellen des Kopfstückes ist es bekannt, eine Gewindespindel zu verwenden, durch deren Drehung das Kopfstück in Bezug zum Grundkörper verschoben wird. Das Einstellen der Bandspannung mit Hilfe einer solchen Gewindespindel ist allerdings mühsam und zeitaufwändig, da jeweils bei gegebener Stellung des Kopfstückes die Bandspannung gemessen werden muss, um zu entscheiden, ob sie korrekt ist oder eine weitere Verschiebung des Kopfstückes in eine oder die entgegengesetzte Richtung erforderlich ist. Wenn eine Bandfördervorrichtung mehrere parallel angeordnete umlaufende Endlosbänder aufweist, muss dieser Vorgang für jedes Endlosband einzeln durchgeführt werden. Außerdem ist es bei einer Anordnung von mehreren Spannvorrichtungen für mehrere Bänder schwierig, die Stellbewegung auf die Gewindespindel jeder einzelnen Stellvorrichtung in einem kompakten Aufbau zu übertragen.

Eine Vereinfachung des Spannvorganges ergibt sich bei Verwendung einer mit Hilfe eines Druckfluids angetriebenen Spannvorrichtung. Zum einen ist durch den Druck des Druckfluids nicht eine Position des bewegbaren Kopfstückes vorgegeben, sondern die zu erzielende Bandspannung; d. h. je nach Länge und Dehnbarkeit des zu spannenden Endlosbandes können sich bei gleichem Druck des Druckfluids unterschiedliche Stellungen des Kopfstückes ergeben. So entfällt die Notwendigkeit, die Bandspannung zu messen, und darüber hinaus können mehrere Spannvorrichtungen für Bänder einer gleichen Transportvorrichtung parallel mit Druckfluid beaufschlagt werden, um in sämtlichen Bändern ungeachtet eventueller Streuungen ihrer Länge und/oder Dehnbarkeit dieselbe Bandspannung zu erzeugen.
Es zeigt sich jedoch, dass eine solche pneumatisch betriebene Spannvorrichtung zu einem höheren Verschleiß der Endlosbänder führt als eine mechanisch wirkende Spannvorrichtung.

Die DE 35 31 552 A1 offenbart eine spannbare Bandumkehre eines im Berg- und Tunnelbau eingesetzten Gurtförderers, die mittels Arbeitszylinder bewegbar und auch arretierbar ist.

Durch die DE 83 17 386 U1 ist eine Kettenförderer für den untertägigen Bergbau bekannt, wobei ein Hubzylinder und eine Arretierung vorgesehen sind.

Die DE 18 01 522 A beschreibt eine Spannanordnung für endlose Zugmittel mit einem Druckmittelzylinder.

Die DE 38 35 524 A1 offenbart eine Umkehrstation eines Kettenkratzförderers mit Spanneinrichtung für das Kratzerkettenband.

Die DE 25 54 785 A1, die DE 100 14 700 A1, die DE 43 15 504 A1, die DE 42 30 781 C2, die DE 35 40 880 A1 und die DE 90 95 350 U1 zeigen mit Druckmittel betätigbare Antriebe.

Die DE 31 13 894 A1 offenbart einen druckmittelbetriebenen Arbeitszylinder, wobei die Kolbenstange mit einer druckmittelbetriebenen ortsfest angeordneten Vorrichtung stufenlos fixiert wird.

Die EP 0 890 532 A1 betrifft eine Vorrichtung zum Spannen von Transportsystemen für flache Produkte in einem Falzapparat mit einer Vielzahl von einzelnen Bändern.

Aufgabe der Erfindung ist es, eine Spannvorrichtung eines umlaufenden Elements zu schaffen.

Die Aufgabe wird gelöst durch eine Spannvorrichtung mit den Merkmalen des Anspruchs 1.

Ein Vorteil der erfindungsgemäßen Spannvorrichtung liegt darin, dass sie einerseits eine schnelle und exakte Einstellung der Bandspannung, andererseits aber einen verschleißarmen Betrieb der Endlosbänder ermöglicht. Die Arretierung der Kolbenstange verhindert, dass das Kopfstück bei jeder Abnahme der Bandspannung, die im Betrieb auftritt, zum Beispiel bei der Abgabe eines geförderten Produktes, eine Nachrückbewegung ausführt, durch die das Band im Laufe der Zeit zunehmend ausgeleiert wird.

Zum Schalten der Arretierung der Kolbenstange dient vorzugsweise wenigstens eine zweite mit Druckfluid beaufschlagbare Kammer des Grundkörpers.

Einer Ausgestaltung der Erfindung zufolge enthält jede zweite Kammer einen verschiebbaren Kolben, der im mit Druckfluid beaufschlagten Zustand der zweiten Kammer gegen die Kolbenstange gedrückt ist.

Einer alternativen Ausgestaltung zufolge kann jede zweite Kammer durch eine Membran begrenzt sein, die im mit Druckfluid beaufschlagten Zustand der zweiten Kammer gegen die Kolbenstange gedrückt ist.

Um ein Ausweichen der Kolbenstange unter einem von der zweiten Kammer aus auf sie ausgeübten Druck zu vermeiden, ist die Kolbenstange vorzugsweise durch einen Durchgang geführt, wobei auf einer Seite des Durchganges die zweite Kammer angeordnet ist und eine der ersten Seite gegenüberliegende zweite Seite des Durchganges durch ein fest mit dem Grundkörper verbundenes Widerlager gebildet ist.

Zum Vermeiden des Ausweichens der Kolbenstange ist es ferner sinnvoll, dass die von mehreren mit Druckfluid beaufschlagten zweiten Kammern auf die Kolbenstange ausgeübten Kräfte einander kompensieren, insbesondere indem die Membranen oder Kolben mehrerer zweiter Kammern bei Druckbeaufschlagung jeweils Bewegungen in entgegengesetzte Richtungen ausführen und Kräfte von im Wesentlichen gleichem Betrag auf die Kolbenstange ausüben.

Insbesondere zu diesem Zweck ist es sinnvoll, wenn die Kolbenstange in mehrere Zweige aufgeteilt ist und eine die zweiten Kammern enthaltende Region des Grundkörpers zwischen den Zweigen angeordnet ist.

Um eine ausreichende Steifigkeit zu gewährleisten, sind die Zweige vorzugsweise an jeweils zwei Enden zu einem die Region umgreifenden Rahmen verbunden.

Um den Aufbau kompakt zu halten, kann in der zwischen den Zweigen angeordneten Region des Grundkörpers auch die erste Kammer angeordnet sein.

Der Kolben der ersten Kammer ist vorzugsweise doppelt wirkend, um sowohl eine Ausfahrbewegung als auch eine Zurückweichbewegung des Kopfstückes steuern zu können.

Versorgungsanschlüsse zur Versorgung der ersten und zweiten Kammer mit Druckfluid sind vorzugsweise paarweise fluchtend und miteinander kommunizierend an entgegengesetzten Seiten des Grundkörpers angebracht. Dies vereinfacht die Nebeneinandermontage von mehreren Spannvorrichtungen für mehrere Bänder einer gleichen Bandfördervorrichtung.

Zur Befestigung der Spannvorrichtung am Träger kann der Grundkörper mit einer Bohrung zum Aufnehmen des Trägers versehen sein.

Diese Bohrung erstreckt sich zweckmäßigerweise parallel zur Fluchtrichtung der kommunizierenden Versorgungsanschlüsse.

Die Kammern und das Kopfstück sind vorzugsweise an diametral entgegengesetzten Seiten der Bohrung angeordnet. So kann der Träger die Spannvorrichtung nah an ihrem Schwerpunkt unterstützen, und zwischen Träger und Spannvorrichtung treten allenfalls kleine Drehmomente auf.

Weitere Merkmale und Vorteile der Erfindung ergeben sich aus der nachfolgenden Beschreibung von Ausführungsbeispielen unter Bezugnahme auf die beigefügten Figuren.

### Es zeigen:

- Fig. 1: eine perspektivische Ansicht einer erfindungsgemäßen Spannvorrichtung;
- Fig. 2A-D: schematische Darstellungen von Varianten der Spannvorrichtung;
- Fig. 3: einen Schnitt durch die Spannvorrichtung;
- Fig. 4: eine alternative Halteeinrichtung der Spannvorrichtung;
- Fig. 5: eine Anordnung von mehreren zu einer Baugruppe zusammengefassten Spannvorrichtungen;
- Fig. 6: einen vergrößerten Teilschnitt durch in einer Baugruppe zusammengefasste Spannvorrichtungen;
- Fig. 7: einen vergrößerten Teilschnitt eines Kopfstückes der Spannvorrichtung;
- Fig. 8: eine schematische Darstellung eines Falzapparates mit Bandsystemen;
- Fig. 9: eine schematische Darstellung eines Bandspanners.

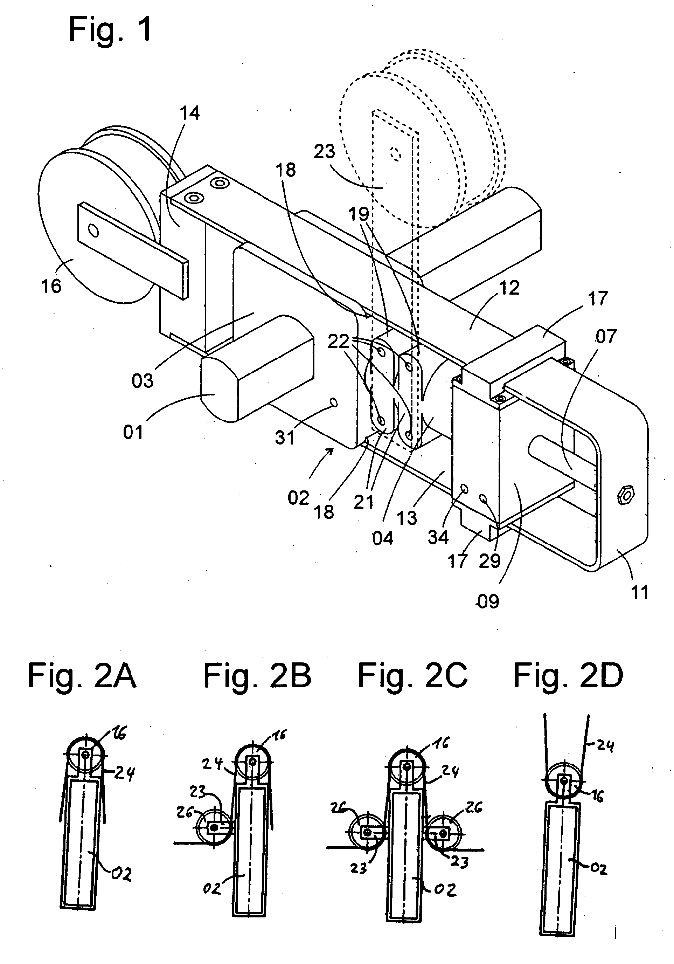

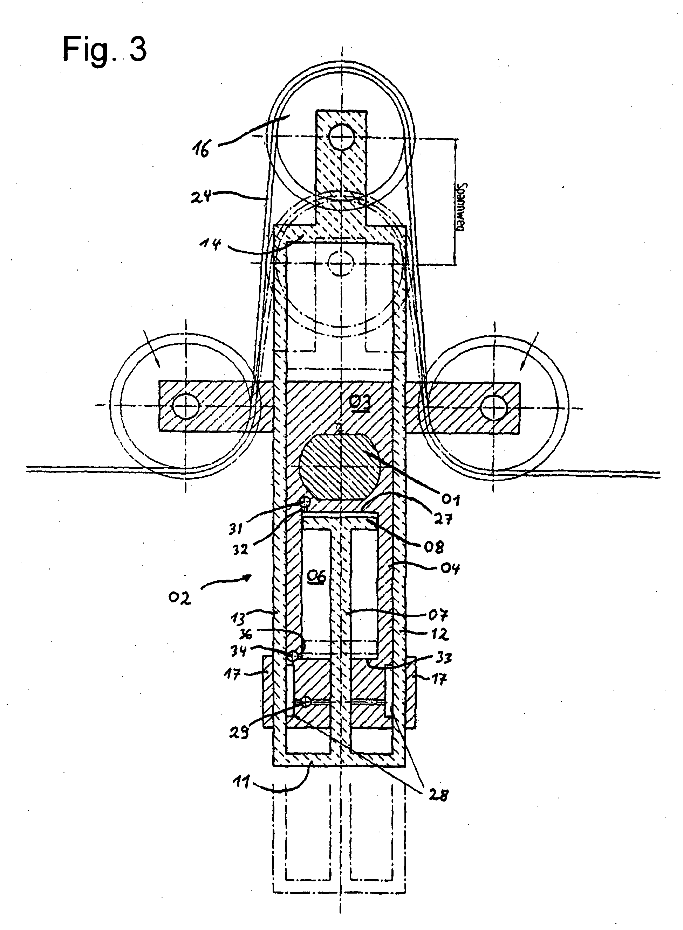

Die Spannvorrichtung der Fig. 1 ist auf einem stabförmigen Träger 01 mit unrundem Querschnitt montiert dargestellt. Ein Grundkörper 02 der Spannvorrichtung ist in Längsrichtung gegliedert in ein Fußstück 03, einen Zylinderabschnitt 04 und einen Kopfabschnitt 09. Der Träger 01 durchsetzt eine Bohrung in dem Fußstück 03. In dem Zylinderabschnitt 04 ist eine erste Kammer 06 (siehe Fig. 3) gebildet. Eine Kolbenstange 07, die mit einem Kolben 08 in der ersten Kammer 06 verbunden ist, tritt an dem Kopfabschnitt 09 des Grundkörpers 02 aus. Die Kolbenstange 07 ist verlängert durch ein aus einem Metallstreifen geformtes U-förmiges Joch 11, dessen zwei Schenkel 12, 13 an entgegengesetzten Seiten des Grundkörpers 02 bis jenseits des Trägers 01 zurückgeführt sind. Die Schenkel 12, 13 sind jeweils durch einen vom Kopfabschnitt 09 und einen daran befestigten Bügel 17 begrenzten Durchgang geführt und erstrecken sich durch eine Nut 18 an einer oberen bzw. unteren Schmalseite des Fußstückes 03. An ihren freien Enden sind die zwei Schenkel 12, 13 durch einen Block 14 fest zu einem starren viereckigen Rahmen verbunden. Der Block 14 trägt eine drehbare Riemenscheibe 16, die vorgesehen ist, um von einem zu spannenden Endlosband umschlungen zu werden. Die Kolbenstange 07, das Joch 11 und der Block 14 können gemeinsam als eine Kolbenstange im weiteren Sinne aufgefasst werden, die die Riemenscheibe 16 mit dem Kolben 08 verbindet, um eine Stellbewegung der Riemenscheibe 16 anzutreiben.

An dem Zylinderabschnitt 04 sind zwei Paare von Rippen 19 mit in einer gleichen, zur Längsrichtung des Trägers 01 senkrechten Ebene liegenden Stirnflächen 21 gebildet. Gewindebohrungen 22 in den Stirnflächen 21 ermöglichen die Anbringung eines eine weitere Riemenscheibe tragenden Armes 23, der, da fakultativ, in Fig. 1 gestrichelt dargestellt ist.

Der Kolbendurchmesser beträgt vorzugsweise 25 mm bis 40 mm, vorzugsweise 32 mm. Damit sind Bänder mit einer Breite von 25 mm bis 35 mm, vorzugsweise von 30 mm spannbar.

Wie in Fig. 2A schematisch dargestellt, kann die erfindungsgemäße Spannvorrichtung als einzige Riemenscheibe die Riemenscheibe 16 haben und ein die Riemenscheibe 16 an einem vom Grundkörper abgewandten Abschnitt ihres Umfangs umschlingendes Band 24 spannen, indem die Riemenscheibe 16 vom Grundkörper 02 weggeschoben wird; es kann der bereits erwähnte Arm 23 mit einer weiteren, von dem Band 24 umschlungenen Riemenscheibe 26 vorgesehen sein (Fig. 2B), oder der Arm 23 kann in entgegengesetzte Richtungen vom Grundkörper 02 abstehen und an jedem freien Ende eine Riemenscheibe 26 tragen (Fig. 2C). Des Weiteren kommt gemäß Fig. 2D eine Anordnung in Betracht, in der die verschiebbare Riemenscheibe 16 allein vorgesehen ist, sie aber an ihrer dem Grundkörper 02 zugewandten Seite von dem zu spannenden Band 24 umschlungen ist.

Fig. 3 zeigt im Detail einen Schnitt durch die Spannvorrichtung in der Anordnung gemäß Fig. 2C. Eine erste Anschlagkonfiguration, in der die Riemenscheibe 16 weitestmöglich vom Grundkörper 02 entfernt ist, ist mit durchgezogenen Linien dargestellt. In dieser Konfiguration befindet sich der Kolben 08 in der ersten Kammer 06 in unmittelbarer Nachbarschaft zu einer dem Träger 01 benachbarten Stirnseite 27 der Kammer 06. Die Kolbenstange 07 erstreckt sich durch die Kammer 06 und eine Bohrung des Kopfabschnittes 09 bis zu einem außerhalb des Grundkörpers 02 liegenden Verbindungspunkt mit dem Joch 11. Dessen zwei Schenkel 12, 13 verlaufen parallel zu der Kolbenstange 07 in entgegengesetzter Richtung zwischen dem Kopfabschnitt 09 und den daran befestigten Bügeln 17. Im Kopfabschnitt 09 den Bügeln 17 gegenüberliegend sind zwei Kammern 28 zu erkennen, die über eine parallel zum Träger 01 durch den Kopfabschnitt 09 verlaufende Bohrung 29 mit Druckluftbeaufschlagbar sind. Die Kammern 28 enthalten jeweils eine Membran oder eine Kolbenplatte, die, wenn die Kammern 28 mit Druckluft beaufschlagt sind, die Schenkel 12, 13 gegen die Bügel 17 pressen und so in ihrer Stellung fixieren. Im drucklosen Zustand der Kammern 28 sind die Schenkel 12, 13 frei verschiebbar.

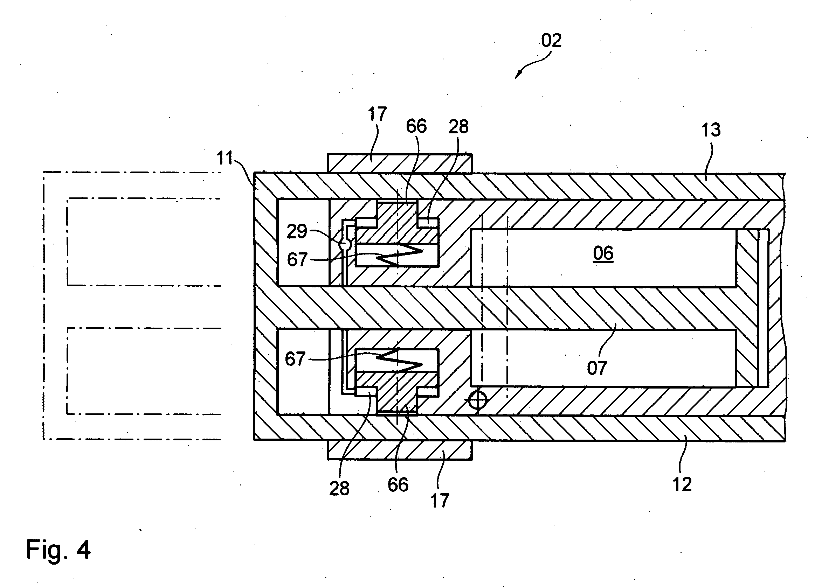

In einer anderen Ausführung z. B. gemäß Fig. 4 sind in den Kammern 28 Druckstücke 66 angeordnet, die mittels Druckfedern 67 die Schenkel 12, 13 gegen die Bügel 17 drücken. Bei Beaufschlagung der Kammer 28 mit Druckmittel werden die Kolben 08 und somit die Arretierung gelöst. Zum Arretieren der einzelnen Spannrolle 16 in einer Stellung dient ein unter Federdruck stehendes Druckstück 66 mit fein verzahnter Oberfläche das eine Bewegung des U-fömigen Jochs 11, z. B. ebenfalls mit fein verzahnter Oberfläche versehen, durch Formschluss verhindert. Um einen Spanvorgang der Spannrolle zu ermöglichen, wird der Federdruck auf das Druckstück 66 pneumatisch aufgehoben.
Bei Abfall der pneumatischen Beaufschlagung wird die Arretierung durch Formschluss wieder wirksam und die Spannrolle 16 ist in einer neuen Stellung fixiert.

In einer anderen Ausführung verbleibt in drucklosen Zustand der Kammern 28 eine Resthaltekraft durch Reibwiderstand, insbesondere auch bei ungünstiger Einbaulage der Spannvorrichtungen 37. Hierbei behält die Riemenscheibe 16 ihre Stellung bei, wodurch die Bänder 24 auch bei Abschaltung des Druckmediums in der Spur bleiben.

Eine zweite zum Träger 01 parallele Bohrung 31 erstreckt sich durch das Fußstück 03. Sie kommuniziert mit der ersten Kammer 06 über eine Stichbohrung 32, die auf die Stirnseite 27 der Kammer 06 mündet. Wenn die Kammern 28 drucklos sind und die Bohrung 31 mit Druckluft beaufschlagt ist, so treibt die über die Bohrung 31 in die Kammer 06 zuströmende Druckluft den Kolben 08 aus der durchgezogen gezeichneten Anschlagstellung bis in eine mit strichpunktierten Linien dargestellte entgegengesetzte Anschlagstellung, in der der Kolben 08 sich in unmittelbarer Nähe der gegenüberliegenden Stirnseite 33 der Kammer 06 befindet.

Eine dritte Bohrung 34 im Kopfabschnitt 09 kommuniziert mit der Kammer 06 über eine benachbart zur Stirnseite 33 mündende Stichbohrung 36, so dass durch Druckbeaufschlagung der Bohrung 34 bei gleichzeitiger Druckentlastung der Bohrung 31 der Kolben 08 in die durchgezogen dargestellte Konfiguration zurückgetrieben werden kann.

Wenn das Band 24 wie in Fig. 3 dargestellt um die Riemenscheibe 16 geschlungen ist, kann das Band 24 die Rückkehr des Kolbens in die durchgezogen dargestellte Konfiguration verhindern; statt dessen kommt der Kolben 24 in einer nicht dargestellten Zwischenstellung zur Ruhe, in welcher der auf den Kolben 08 wirkende Druck und die Spannung des Bandes 24 einander ausgleichen.

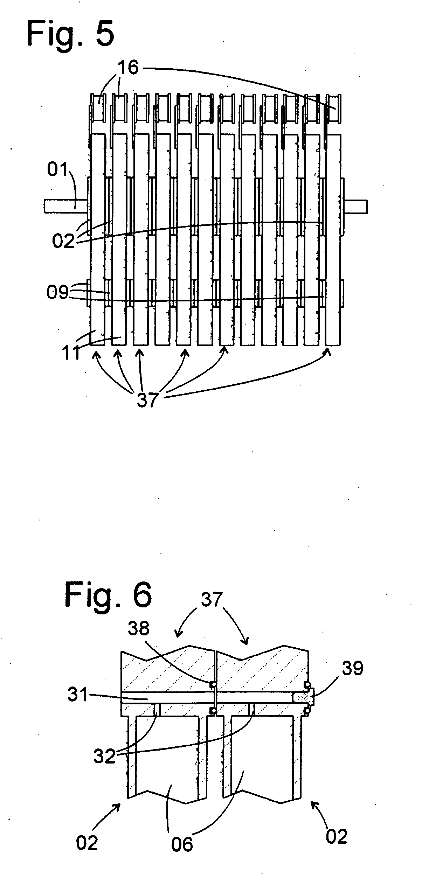

Dies ermöglicht es, eine Vielzahl von Spannvorrichtungen 37, die wie z. B. in Fig. 5 gezeigt, nebeneinander auf dem gleichen Träger 01 montiert sind, einfach und schnell einzustellen, indem alle mit einem gleichen Druck an ihrer Bohrung 34 (oder ihrer Bohrung 31 im Falle einer Anordnung des Bandes 24 gemäß Fig. 2D) beaufschlagt werden. Die infolge der Druckbeaufschlagung zurückgelegte Stellbewegung kann von einer Spannvorrichtung 37 zur anderen unterschiedlich sein; die erzeugte Bandspannung ist bei alten Spannvorrichtungen 37 die gleiche. Nach Einstellen der Bandspannung wird jeweils die Bohrung 29 druckbeaufschlagt, um die Spannvorrichtungen 37 in der eingestellten Konfiguration zu verriegeln. Anschließend kann die Kammer 06 bis zum nächsten Einstellvorgang drucklos gelassen werden.

Die Stellbewegung (Hub) z.B. 55 mm bis 65 mm einer einzelnen Spannvorrichtung 37 ist vorzugsweise größer als ein Radius, insbesondere als ein Durchmesser der Riemenscheibe 16.

Wie z. B. in Fig. 5 gezeigt, sind die Spannvorrichtungen 37 auf dem Träger 01 so eng platziert, dass die Fußstücke 03 und Kopfabschnitte 09 ihrer Grundkörper sich gegenseitig berühren. Um homologe Bohrungen 29, 31 bzw. 34 der Spannvorrichtungen 37 jeweils gleichzeitig mit Druckgas zu beaufschlagen, genügt es, wie in dem Teilschnitt der Fig. 6 am Beispiel der Bohrungen 31 gezeigt, jeweils an einer Seite des Grundkörpers 02 die Bohrung umgebend eine mit einem Dichtring 38 bestückte Nut vorzusehen, wobei der Dichtring 38 zwischen den Grundkörpern 02 der Spannvorrichtungen 37 komprimiert wird, und an einem von der Druckgasquelle abgewandten Ende der miteinander fluchtenden Bohrungen 31 einen Stopfen 39 einzusetzen. So genügt eine einzige Druckgasquelle in Verbindung mit einem Wegeventil oder mit zwei Absperrventilen, um die Spannvorrichtungen 37 einzustellen und in der eingestellten Konfiguration zu fixieren.

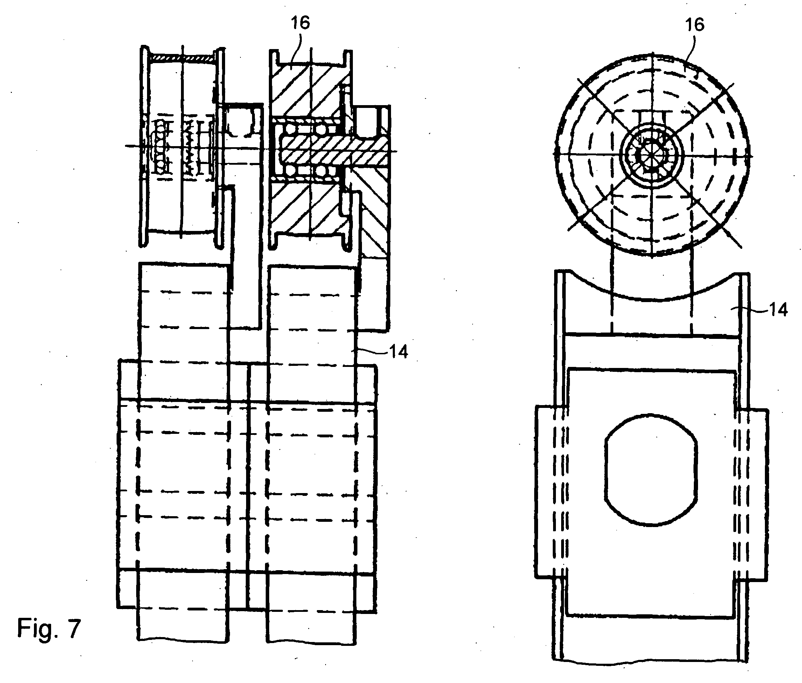

Die Spannvorrichtung kann zum Spannen von umlaufenden Endlosbändern 24 für beliebige Anwendungen eingesetzt werden, wobei der Träger 01 im Allgemeinen an demselben Gestell angebracht ist, an dem auch die Endlosbänder 24 führende Umlenkwalzen montiert sind. Sie erlaubt das Einstellen der Endlosbänder 24 in Ruhe oder in Bewegung. Ein bevorzugtes Einsatzgebiet sind Endlosbänder, die in einem an sich bekannten Falzapparat 41 zum Transport von zu falzenden Druckerzeugnissen dienen. Fig. 7 zeigt eine Riemenscheibe 16, die mittels Wälzlager auf dem Kopfstück 26 angeordnet ist. Die Riemenscheibe 16 kann unterschiedliche Breiten (6,5 mm, 9 mm, 18 mm, 20 mm, 22 mm) und insbesondere Formen der Laufflächen aufweisen (plan, konvex).

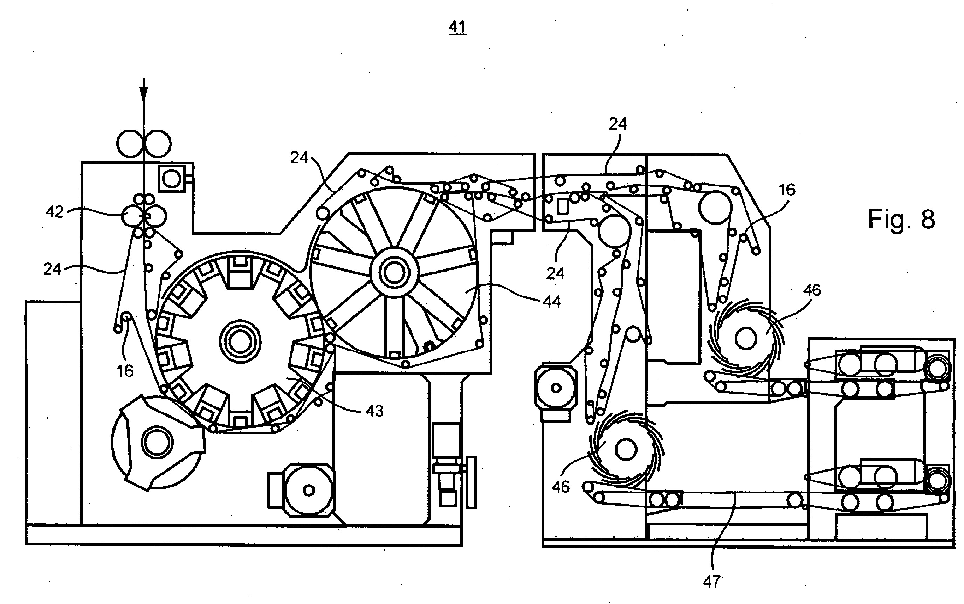

In Fig. 8 ist exemplarisch ein Falzapparat 41 mit entsprechenden Bändern 24 dargestellt. Dem Falzapparat 41 ist eine Querschneidvorrichtung 42 vorgeordnet, welcher einen z. B. bedruckten Papierstrang in Produktabschnitte quer schneidet bevor diese auf der Oberfläche eines Transport- bzw. Falzmesserzylinders 43 (z. B. mittels Punkturnadeln oder Greifern gehalten) aufgenommen und im Spalt mit einem Falzklappenzylinder 44 quergefalzt und von letzterem übernommen werden. Zwischen Querschneider 42 und Falzmesserzylinder 43 kann ein als Beschleunigungsband ausgebildetes Band 24 zur Führung der Produktabschnitte vorgesehen sein. Anschließend an den Falzklappenzylinder 44 wird das Produkt z.B. von einem Bandsystem mit mindestens einem Band 24 aufgenommen und z. B. einem oder mehreren Schaufelrädern 46 oder einem anderen, nicht dargestelltem optionalen Aggregat eines Falzapparates (zweiter Längsfalz und/oder zweiter Querfalz) zugeführt. Das dem Falzklappenzylinder 44 nachgeordnete Bandsystem ist beispielsweise doppelt mit zwei Bändern 24 ausgebildet, zwischen denen die Produktabschnitte gefördert werden. Dem Schaufelrad 46 ist z. B. ein Auslageband 47 nachgeordnet. Exemplarisch ist in Fig. 8 im dem Falzmesserzylinder 43 vorgeordneten und in einem dem Falzklappenzylinder 44 nachgeordneten Bandsystem jeweils eine entsprechende Spannvorrichtung durch eine Riemenscheibe 16 angedeutet. Eine oder mehrere derartige Spannvorrichtungen können in jedem Bandsystem vorgesehen sein.

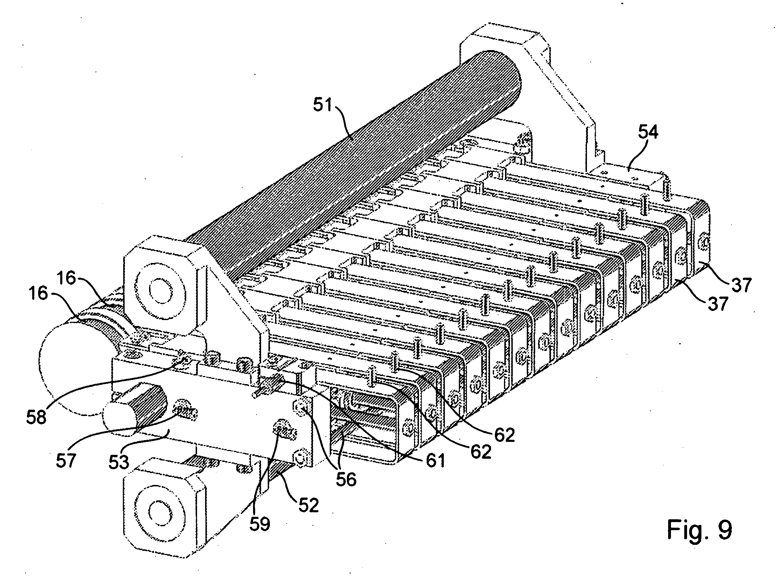

In einer weiteren Ausführungsform ist anstelle der einzelnen Riemenscheibe 16 zum Umlenken einer quer zur Laufrichtung der Transportbänder durchgehende Umlenkwalze 51 vorgesehen. Für eine Mehrzahl von Spannvorrichtungen 37 ist zumindest eine gemeinsame Umlenkwalze 51 angeordnet. Im dargestellten Ausführungsbeispiel (Fig. 9) ist für alle Spannvorrichtungen 37eine erste Umlenkwalze 51 und eine zweite Umlenkwalze 52 angeordnet.

Die Spannvorrichtungen 37 sind auf einem Träger 01 angeordnet und werden mittels jeweils einer Endplatte 53; 54 in Längsrichtung des Trägers 01 fixiert. Dazu sind die beiden Endplatten 53; 54 beispielsweise mittels Zugstangen verspannt. Auch können die beiden Endplatten 53; 54 z. B. verschraubte Lagerungen, insbesondere Wälzlager, zur Aufnahme der Umlenkwalzen 51; 52 tragen.

Insbesondere ist zumindest eine der Endplatten 53; 54 mit zumindest einem Anschluss 57; 58 zur Zufuhr des Druckfluids zum Spannen und/oder Entspannen des Endlosbandes 24 (bzw. des Kolbens 08) und/oder ein Anschluss 59 zum Arretieren der Position des Endlosbandes 24 (bzw. des Kolbens 08) verbunden.

In einer vorteilhaften Ausführung ist z. B. auf zumindest einer Endplatte 53; 54 ein Sensor 61 angeordnet. Dieser Sensor 61 erfasst die Position zumindest einer Spannvorrichtung 37, insbesondere eines mit der Riemenscheibe 16 zusammenwirkenden Teiles (vorzugsweise des Jochs 11).

Dazu ist ein Referenzelement 62 (z. B. ein Stift 62) gemeinsam mit der Riemenscheibe 16 beweglich auf jeder Spannvorrichtung 37 angeordnet. Auch kann das Referenzelement 62 innerhalb des U-förmigen Jochs 11 angeordnet sein. Der als z. B. Fotozelle ausgeführte Sensor 61 dedektiert die Position der Riemenscheibe 16 und signalisiert somit ein Ende des Spannungsweges und/oder einen Verschleiß der Endlosbänder 24.

### Bezugszeichenliste

- 01: Träger
- 02: Grundkörper
- 03: Fußstück
- 04: Zylinderabschnitt
- 05: -
- 06: erste Kammer
- 07: Kolbenstange
- 08: Kolben
- 09: Kopfabschnitt
- 10: -
- 11: Joch
- 12: Schenkel
- 13: Schenkel
- 14: Block
- 15: -
- 16: Riemenscheibe
- 17: Bügel
- 18: Nut
- 19: Rippe
- 20: -
- 21: Stirnfläche
- 22: Gewindebohrung
- 23: Arm
- 24: Element, Band, Endlosband
- 25: -
- 26: Riemenscheibe, Kopfstück
- 27: Stirnseite v. 06
- 28: Kammer
- 29: Bohrung
- 30: -
- 31: Bohrung
- 32: Stichbohrung
- 33: Stichseite
- 34: Bohrung
- 35: -
- 36: Stichbohrung
- 37: Spannvorrichtungen
- 38: Dichtring
- 39: Stopfen
- 40: -
- 41: Falzapparat
- 42: Querschneider
- 43: Falzmesserzylinder
- 44: Falzklappenzylinder
- 45: -
- 46: Schaufelrad
- 47: Auslageband
- 48: -
- 49: -
- 50: -
- 51: Umlenkwalze
- 52: Umlenkwalze
- 53: Endplatte
- 54: Endplatte
- 55: -
- 56: Zugstange
- 57: Anschluss
- 58: Anschluss
- 59: Anschluss
- 60: -
- 61: Sensor
- 62: Referenzelement, Stift
- 63: -
- 64: -
- 65: -
- 66: Druckstück
- 67: Druckfeder

## Patentansprüche

1. Spannvorrichtung (37) eines umlaufenden Elementes (24), mit einem Grundkörper (02), in dem eine erste Kammer (06) gebildet ist, einem in der ersten Kammer (06) mittels eines Druckfluids verschiebbaren Kolben (08) und einer durch den Kolben (08) angetriebenen Kolbenstange (09, 11, 14), **dadurch gekennzeichnet, dass** der Grundkörper (02) fest an einem Träger (01) angebracht ist und die Kolbenstange (09, 11, 14) ein in Kontakt mit dem umlaufenden Element (24) bewegbares Kopfstück (16) trägt, dass eine Arretierung der Kolbenstange (09, 11, 14) mittels Druckfluid schaltbar ist, dass der Grundkörper (02) wenigstens eine zweite Kammer (28) aufweist, dass die zweite Kammer (28) zum Schalten der Arretierung der Kolbenstange (09, 11, 14) mit Druckfluid beauschlagt ist, und dass die Kolbenstange (09, 11, 14) durch einen Durchgang geführt ist, wobei auf einer ersten Seite des Durchgangs die zweite Kammer (28) angeordnet ist und eine der ersten Seite gegenüberliegende zweite Seite des Durchgangs durch ein fest mit dem Grundkörper (02) verbundenes Widerlager (17) gebildet ist.

2. Spannvorrichtung nach Anspruch 1, **dadurch gekennzeichnet, dass** die zweite Kammer (28) zum Arretieren der Kolbenstange (09, 11, 14) mit Druckfluid beaufschlagt ist.

3. Spannvorrichtung nach Anspruch 1, **dadurch gekennzeichnet, dass** die zweite Kammer (28) zum Lösen der Arretierung der Kolbenstange (09, 11, 14) drucklos ist.

4. Spannvorrichtung nach Anspruch 1, **dadurch gekennzeichnet, dass** jede zweite Kammer (28) einen verschiebbaren Kolben (08) oder Druckstück (66) enthält.

5. Spannvorrichtung nach Anspruch 4, **dadurch gekennzeichnet, dass** der Kolben (08) im mit Druckfluid beaufschlagten Zustand der zweiten Kammer (28) gegen die Kolbenstange (09, 11, 14) gedrückt ist.

6. Spannvorrichtung nach Anspruch 4, **dadurch gekennzeichnet, dass** eine Druckfeder (67) das Druckstück (66) zum Arretieren gegen die Kolbenstange (09, 11, 14) drückend angeordnet ist.

7. Spannvorrichtung nach Anspruch 1, **dadurch gekennzeichnet, dass** jede zweite Kammer (28) durch eine Membran begrenzt ist, die im mit Druckfluid beaufschlagten Zustand der zweiten Kammer (28) gegen die Kolbenstange (09, 11, 14) gedrückt ist.

8. Spannvorrichtung nach einem der Ansprüche 1 bis 7, **dadurch gekennzeichnet, dass** die Kolbenstange (09, 11, 14) in mehrere Zweige (12, 13) aufgeteilt ist, und dass eine die zweiten Kammern (28) enthaltende Region (09) des Grundkörpers (02) zwischen den Zweigen (12, 13) angeordnet ist.

9. Spannvorrichtung nach Anspruch 8, **dadurch gekennzeichnet, dass** die Zweige (12, 13) an jeweils zwei Enden zu einem die Region (09) umgreifenden Rahmen (11, 14) verbunden sind.

10. Spannvorrichtung nach Anspruch 8 oder 9, **dadurch gekennzeichnet, dass** in der zwischen den Zweigen (12, 13) angeordneten Region (04, 09) des Grundkörpers (02) auch die erste Kammer (06) angeordnet ist.

11. Spannvorrichtung nach einem der vorhergehenden Ansprüche, **dadurch gekennzeichnet, dass** der Kolben (08) der ersten Kammer (06) doppelt wirkend ist.

12. Spannvorrichtung nach Anspruch 1 oder 2, **dadurch gekennzeichnet, dass** das Kopfstück (16) als Riemenscheibe (16) ausgebildet ist, dass das umlaufende Element (24) ein Band (24) ist und dass die Spannvorrichtung mit einem Band (24) in einem Falzapparat (41) zusammenwirkt.

13. Spannvorrichtung nach Anspruch 1, **dadurch gekennzeichnet, dass** die Kolbenstange (09, 11, 14) stufenlos arretierbar und/oder arretiert ist.

14. Spannvorrichtung nach Anspruch 1, **dadurch gekennzeichnet, dass** die zweite Kammer (28) unabhängig von der ersten Kammer (06) mit Druckmittel beaufschlagbar ist.

15. Spannvorrichtung nach Anspruch 1, **dadurch gekennzeichnet, dass** in einem Betriebszustand die erste Kammer (06) mit Druckmittel beaufschlagt ist und die zweite Kammer (28) drucklos ist.

16. Spannvorrichtung nach Anspruch 1, **dadurch gekennzeichnet, dass** für mehrere Kopfstücke (16) mindestens eine gemeinsame Umlenkwalze (51; 52) angeordnet ist.

17. Spannvorrichtung nach Anspruch 16, **dadurch gekennzeichnet, dass** für alle Kopfstücke (16) eine gemeinsame Umlenkwalze (51; 52) angeordnet ist.

18. Spannvorrichtung nach Anspruch 16, **dadurch gekennzeichnet, dass** für mehrere Kopfstücke (16) jeweils zwei gemeinsame Umlenkwalzen (51; 52) angeordnet sind.

## Claims

1. Tensioning apparatus (37) of a circulating element (24), comprising a base body (02) in which a first chamber (06) is formed, a piston (08) displaceable in the first chamber (06) by means of a hydraulic fluid and a piston rod (09, 11, 14) driven by the piston (08), **characterized in that** the base body (02) is mounted in a fixed manner on a support (01) and the piston rod (09, 11, 14) carries a headpiece (16) moveable in contact with the circulating element (24), **in that** locking of the piston rod (09, 11, 14) is switchable by means of hydraulic fluid, **in that** the base body (02) has at least one second chamber (28), **in that** the second chamber (28) is fed with hydraulic fluid for switching the locking of the piston rod (09, 11, 14), and **in that** the piston rod (09, 11, 14) is guided through a passage, the second chamber (28) being arranged on a first side of the passage, and a second side of the passage which is opposite the first side being formed by an abutment (17) firmly connected to the base body (02).

2. Tensioning apparatus according to Claim 1, **characterized in that** the second chamber (28) is fed with hydraulic fluid for locking the piston rod (09, 11, 14).

3. Tensioning apparatus according to Claim 1, **characterized in that** the second chamber (28) is pressureless for eliminating the locking of the piston rod (09, 11, 14).

4. Tensioning apparatus according to Claim 1, **characterized in that** each second chamber (28) contains a displaceable piston (08) or thrust piece (66).

5. Tensioning apparatus according to Claim 4, **characterized in that** the piston (08) is pressed against the piston rod (09, 11, 14) when the second chamber (28) is in the state in which it is fed with hydraulic fluid.

6. Tensioning apparatus according to Claim 4, **characterized in that** a pressure spring (67) is arranged so as to press the thrust piece (66) against the piston rod (09, 11, 14) for locking.

7. Tensioning apparatus according to Claim 1, **characterized in that** each second chamber (28) is bounded by a membrane which is pressed against the piston rod (09, 11, 14) when the second chamber (28) is in the state in which it is fed with hydraulic fluid.

8. Tensioning apparatus according to any of Claims 1 to 7, **characterized in that** the piston rod (09, 11, 14) is divided into a plurality of branches (12, 13), and **in that** a region (09) of the base body (02) which contains the second chambers (28) is arranged between the branches (12, 13).

9. Tensioning apparatus according to Claim 8, **characterized in that** the branches (12, 13) are connected, at in each case two ends, to a frame (11, 14) surrounding the region (09).

10. Tensioning apparatus according to Claim 8 or 9, **characterized in that** the first chamber (06) is also arranged **in that** region (04, 09) of the base body (02) which is arranged between the branches (12, 13).

11. Tensioning apparatus according to any of the preceding claims, **characterized in that** the piston (08) of the first chamber (06) is double-acting.

12. Tensioning apparatus according to Claim 1 or 2, **characterized in that** the head piece (16) is in the form of a belt pulley (16), **in that** the circulating element (24) is a belt (24) and **in that** the tensioning apparatus cooperates with a belt (24) in a folding apparatus (41).

13. Tensioning apparatus according to Claim 1, **characterized in that** the piston rod (09, 11, 14) can be locked and/or is locked in a continuous manner.

14. Tensioning apparatus according to Claim 1, **characterized in that** the second chamber (28) can be fed with hydraulic medium independently of the first chamber (06).

15. Tensioning apparatus according to Claim 1, **characterized in that**, in one operating state, the first chamber (06) is fed with hydraulic medium and the second chamber (28) is pressureless.

16. Tensioning apparatus according to Claim 1, **characterized in that** at least one common deflection roller (51; 52) is arranged for a plurality of head pieces (16).

17. Tensioning apparatus according to Claim 16, **characterized in that** a common deflection roller (51; 52) is arranged for all head pieces (16).

18. Tensioning apparatus according to Claim 16, **characterized in that** in each case two common deflection rollers (51; 52) are arranged for a plurality of head pieces (16).

## Revendications

1. Dispositif de serrage (37) d'un élément (24) en rotation, avec un corps de base (02), dans lequel est formée une première chambre (06), un piston (08) déplaçable dans la première chambre (06) au moyen d'un fluide sous pression, et une tige de piston (09, 11, 14), entraînée par le piston (08), **caractérisé en ce que** le corps de base (02) est monté rigidement sur un support (01), et la tige de piston (09, 11, 14) porte une pièce de tête (16) déplaçable en contact avec l'élément (24) en rotation, **en ce qu'**un blocage de la tige de piston (09, 11, 14) peut être commuté au moyen d'un fluide sous pression, **en ce que** le corps de base (02) présente au moins une deuxième chambre (28), **en ce que** la deuxième chambre (28) est sollicité avec un fluide sous pression, pour commuter le blocage de la tige de piston (09, 11, 14), et **en ce que** la tige de piston (09, 11, 14) est guidée à travers un passage, où la deuxième chambre (28) est disposée sur un premier côté du passage, et un deuxième côté, opposé au premier côté, du passage est formé par un contre-palier (17) relié rigidement au corps de base (02).

2. Dispositif selon la revendication 1, **caractérisé en ce que** la deuxième chambre (28) est sollicitée par du fluide sous pression, pour bloquer la tige de piston (09, 11, 14).

3. Dispositif selon la revendication 1, **caractérisé en ce que** la deuxième chambre (28) est sans pression, pour relâcher la tige de piston (09, 11, 14).

4. Dispositif selon la revendication 1, **caractérisé en ce que** chaque deuxième chambre (28) contient un piston (08) ou une pièce de pressage (66) déplaçable.

5. Dispositif selon la revendication 4, **caractérisé en ce que** le piston (08) est pressé contre la tige de piston (09, 11, 14) lorsque la deuxième chambre (28) est à l'état sollicitée par un fluide sous pression.

6. Dispositif selon la revendication 4, **caractérisé en ce qu'**un ressort de compression (67) est disposé, pressant la pièce de pressage (66) contre la tige de piston (09, 11, 14), pour provoquer le blocage.

7. Dispositif selon la revendication 1, **caractérisé en ce que** chaque deuxième chambre (28) est délimitée par une membrane, pressée contre la tige de piston (09, 11, 14), lorsque la deuxième chambre (28) est à l'état sollicitée par un fluide sous pression.

8. Dispositif selon l'une des revendications 1 à 7, **caractérisé en ce que** la tige de piston (09, 11, 14) est subdivisée en plusieurs branches (12, 13), et **en ce qu'**une région (09), contenant la deuxième chambre (28), du corps de base (02) est disposée entre les branches (12, 13).

9. Dispositif selon la revendication 8, **caractérisé en ce que** les branches (12, 13) sont reliées, chaque fois à deux extrémités, à un cadre (11, 14) entourant la région (09).

10. Dispositif selon la revendication 8 ou 9, **caractérisé en ce que** la première chambre (06) est également disposée dans la région (04, 09), disposée entre les branches (12, 13), du corps de base (02).

11. Dispositif selon l'une des revendications précédentes, **caractérisé en ce que** le piston (08) de la première chambre (06) est à double action.

12. Dispositif selon la revendication 1 ou 2, **caractérisé en ce que** la pièce de tête (16) est réalisée sous forme de poulie (16), **en ce que** l'élément (24) en rotation est une bande (24) et **en ce que** le dispositif de serrage coopère avec une bande (24) dans un appareil de pliage (41).

13. Dispositif selon la revendication 1, **caractérisé en ce que** la tige de piston (09, 11, 14) est susceptible d'être bloquée et/ou est bloquée de façon progressive continue.

14. Dispositif selon la revendication 1, **caractérisé en ce que** la deuxième chambre (28) est susceptible d'être sollicitée par du fluide sous pression, indépendamment de la première chambre (06).

15. Dispositif selon la revendication 1, **caractérisé en ce que**, en un état de fonctionnement, la première chambre (06) est sollicitée par du fluide sous pression, et la deuxième chambre (28) est sans pression.

16. Dispositif selon la revendication 1, **caractérisé en ce qu'**au moins un rouleau de renvoi (51 ; 52) commun est disposé pour plusieurs pièces de tête (16).

17. Dispositif selon la revendication 16, **caractérisé en ce qu'**un rouleau de renvoi (51 ; 52) commun est disposé pour toutes les pièces de tête (16).

18. Dispositif selon la revendication 16, **caractérisé en ce que** chaque fois deux rouleaux de renvoi (51 ; 52) communs sont disposés pour plusieurs pièces de tête (16).
